# EUROPÄISCHE PATENTANMELDUNG

(11) **EP 2 514 772 A1**
(43) Veröffentlichungstag der Anmeldung: **24.10.2012**
(21) Anmeldenummer: 11163557.9
(22) Anmeldetag: 21.04.2011
(51) Int. Cl.: C08F 36/18, C08C 1/15, C08L 11/00

(54) **Polychloropren-Feststoff mit verbesserter Verarbeitbarkeit**

(71) Anmelder: LANXESS Deutschland GmbH, 51369 Leverkusen (DE)
(72) Erfinder: Neuner, Thomas, 40721 Hildende (DE); Stange, Heiner, 41464 Neuss (DE); Josten, Rolf, 41469 Neuss (DE); Feller, Rolf, 40822 Mettmann (DE); Fidan, Mesut, 41539 Dormagen (DE)

(57) **Zusammenfassung**

Die Erfindung betrifft einen Polychloropren-Feststoff, wobei er thixotrope Eigenschaften aufweist.

## Beschreibung

Die Erfindung betrifft einen Polychloropren-Feststoff, dessen Gewinnungs- und Isolierungsverfahren sowie dessen Verwendung zur Herstellung von Kautschukvulkanisaten.

Die Polychloropren-Herstellung ist seit langem bekannt. Durch radikalische Emulsionspolymerisation von Chloropren (2-Chlor-1,3-butadien) werden Latices aus Polychloropren hergestellt. Derartige Latices werden im Rahmen dieser Anmeldung auch als "Polychlorapren-Latices" oder "Polychloropren-Dispersionen" bezeichnet.

Bei der Herstellung werden in einem wässrigen Medium die Monomere in einem Emulgatorsystem polymerisiert. Dieses Emulgatorsystem ist in der Regel anionischer Natur, in seltenen Fällen kommen auch nichtionische oder kationische Systeme zum Einsatz. Der Temperaturbereich, in dem die Polymerisation durchgeführt wird, umfasst Werte von ca. 0°C bis über 80°C. Somit kann die Polymerisation durch thermisch zerfallende Radikalbildner initiiert werden oder durch Redoxsysteme. In der Regel kommen auch Molekulargewichtsregler wie Mercaptane oder Xanthogendisulfide zum Einsatz. In einigen Fällen wird das Molekulargewicht des Endproduktes auch durch Copolymerisation mit Schwefel und anschließende Spaltung der dabei entstehenden sulfidischen Bindungen eingestellt. Der erwünschte Umsatz wird durch Abstoppen der Reaktion mit einem geeigneten Reagenz eingestellt.

Polychloropren-Polymerisate werden durch drei wesentlichen Kriterien charakterisiert, nämlich die Kristallisationstendenz, die Polymerviskosität und u. a. den Grad der Vorvernetzung.

Aus dem Stand der Technik sind Polychloropren-Polymerisate bekannt, die eine sehr geringe, geringe, mittelstarke oder besonders starke Kristallisationsneigung aufweisen. Diejenigen mit besonders starker Kristallisationsneigung werden ausschließlich für die Anwendung im Klebstoffbereich eingesetzt. Die übrigen mit weniger starker Kristallisationsneigung finden in der Fertigung von technischen Gummiwaren, Gewebegummierungen, Kabeln, Schläuchen, Form- und Spritzartikeln und Moosgummiprofilen ihre Anwendung.

Für die Verarbeitung spielt daher die Kristallisationserscheinung eine sehr wichtige Rolle. Als Kristallisation wird eine besonders bei niedrigen Temperaturen verstärkt auftretende Zunahme der Härte in Abhängigkeit von der Lagerzeit verstanden. Die Verhärtung ist ein reversibler Vorgang und kann durch Erwärmen oder dynamische Beanspruchung des kristallisierten Materials beliebig oft rückgängig gemacht werden.

Die Kristallisationsneigung kann durch die Wahl der Polymerisationstemperatur während der Polymerisation eingestellt werden. Bei Polymerisationstemperaturen von kleiner als 20°C werden Polychloropren-Polymerisate mit starker Kristallisationsneigung hergestellt, die für Klebstoffanwendung eingesetzt werden. Bei einer Polymerisationstemperatur über 30°C werden Polychloropren-Polymerisate gewonnen, die eine geringe Kristallisationsneigung aufweisen und für die Herstellung von Vulkanisaten bzw. Gummiprodukten eingesetzt werden

Des Weiteren eignet sich auch die Verwendung von Comonomeren, um die Kristallisationsneigung von Polychloropren zu beeinflussen.

In der weit überwiegenden Zahl der Fälle wird die so erhaltene Dispersion von Polychloropren in Wasser nachfolgend mittels Durchleiten von Wasserdampf entmonomerisiert. Ein Teil des dabei erhaltenen Produktes findet unmittelbar als Latex industrielle Verwendung, der größere Teil jedoch wird durch Koagulation von anhaftendem Wasser befreit und als festes Produkt seiner endgültigen Verwendung zugeführt.

Polychloropren-Feststoffe (sogenannter "CR-Feststoff") sowie daraus hergestellte Vulkanisate zeichnen sich bei entsprechendem Mischungsaufbau durch hohe Wetter- und Ozonbeständigkeit, durch Flammwidrigkeit, sehr gute Alterungseigenschaften, mittlere Ölbeständigkeit sowie durch beträchtliche Widerstandsfähigkeit gegen viele Chemikalien aus. Sie haben gute mechanische Eigenschaften, ein günstiges elastische Verhalten und ein hohe Verschleißfestigkeit.

Vulkanisate aus Polychloropren-Latices (CR-Latices) weisen hinsichtlich Elastizität, Zugfestigkeit, Bruchdehnung und Modul Werte auf, die denen von Naturlatex-Vulkanisaten sehr ähneln, gleichzeitig zeigen sie auch eine gute Lösungsmittel-, Chemikalien-, Öl- und Fettbeständigkeit.

Wie oben erwähnt, geschieht die Abtrennung des CR-Feststoffes aus der Dispersion üblicherweise durch Koagulation. Hierzu sind eine Reihe verschiedener Verfahren bekannt. Durch Mischen der Polychloropren-Latices mit einem Koagulationsmittel wird die Emulsion aufgebrochen. Zu diesem Zweck kann jedes gewöhnliches Koagulationsmittel verwendet werden. So kann man zum Beispiel aus CR-Latices, die unter alkalischen Bedingungen hergestellt wurden, der Feststoff durch Ansäuern, beispielsweise mit einer Mineralsäure oder einer organischen Säure, koagulieren. In vielen Fällen reicht das bloße Ansäuern zur vollständigen Koagulation des Polychloroprens nicht aus, so dass man zusätzlich zur Säure noch starke Elektrolyte (Salze, die mehrwertige Kationen wie Mg²⁺, Ca²⁺ oder Al³⁺ enthalten) zusetzen muss.

Nachteilig bei dieser Methode ist die große Menge an Säure bzw. Elektrolyte, um eine vollständige Ausfällung des Feststoffes zu erreichen. Dabei verbleiben relativ große Mengen an Fällmittel im Produkt, was zu einer Verschlechterung wichtiger Produkteigenschaften führen kann. Daher wird der koagulierte Feststoff zur Entfernung des Fällmittels mit relativ großen Wassermengen gewaschen, was zu ökonomischen und ökologischen Problemen führt. Ferner fällt das Polychloropren teilweise in Form großer Klumpen aus, die in ihrem Inneren entweder noch ungefällten CR-Latex oder überschüssiges Fällmittel enthalten.

Auch ist aus dem Stand der Technik bekannt, die Koagulation durch Einwirkung höherer Temperaturen und/oder erhöhten Drücken sowie durch zusätzliche Einwirkung von Elektrolyten und Scherkräften zu ermöglichen. Ein derartiges Produkt wird einer erheblichen thermischen Belastung ausgesetzt, was zu einer Verschlechterung der Produkteigenschaften führt.

Üblicherweise wird Polychloropren aus wässrigen Dispersionen durch Ausfrieren abgetrennt. Dabei wird durch Abkühlen unter den Gefrierpunkt der wässrigen Phase der CR-Latex ausgefroren. Beim anschließenden Auftauen unter geeigneten Bedingungen liegt das Polychloropren als Koagulat vor und kann von der wässrigen Phase abgetrennt werden.

Um zu technisch ausreichend großen Koagulationsgeschwindigkeiten zu kommen, wird der CR-Latex in dünnen Schichten ausgefroren. Dazu wurden von innen kühlbare Koagulationswalzen entwickelt, die rotierend in den CR-Latex eintauchen und dabei eine dünne Latexschicht beim Rotieren mitnehmen und auf der Oberfläche ausfrieren (US-B 2,187,146). Der dünne Film aus CR-Koagulat und Eis wird mit einem Schaber von der Walze abgenommen und weitergeleitet.

Aus dem Stand der Technik sind weitere Isolierungsverfahren bekannt. US 4,103,074 beschreibt ein Verfahren zur Koagulierung eines Polymer-Latex unter Verwendung eines Schneckenextruders, wobei der Polymer-Latex während der Förderung im Schneckengang koaguliert wird.

US 3,926,877 beschreibt ein Verfahren zur Isolierung eines CR-Kautschuks, wobei der CR-Latex mit einer wässrigen Rußdispersion gemischt wird, bevor dieser mit einem Koagulierungsmittel versetzt wird. Das koagulierte Produkt wird aus der wässrigen Phase abgetrennt.

DE 30 31 088 C2 offenbart ein Verfahren zur Herstellung eines koagulierten Latex eines synthetischen Polymers, wobei ein gasförmiges oder flüssiges Koagulierungsmittel in Form eines Nebels mittels einer Spraydüse auf das Polymerlatex-Tröpfchen aufgebracht wird, so dass Polymerkügelchen ausgefällt werden.

Isolierte Polychloropren-Feststoffe werden vor der Verwendung zur Herstellung von CR-Vulkanisaten zwischengelagert. Obwohl diese Polychloropren-Feststoffe ausgezeichnete Langzeitalterungsbeständigkeit aufweisen, besitzen sie aber doch keine unbegrenzte Stabilität und Lagerfähigkeit. Bei der Lagerung tritt im Laufe der Zeit eine Änderung der Polymereigenschaften ein, z.B. kann es zur Vergelung kommen oder auch zu einem Viskositätsanstieg, wordurch es häufig zu einer erhebliche Beeinträchtigung der Verarbeitbarkeit kommt. Diese Beeinträchtigung der Verarbeitbarkeit zeigt sich insbesondere in einer schlechteren Knet-, und Spritzbarkeit der Polychloroprene sowie in einem ungünstigeren Verhalten bei der maschinellen Verarbeitung.

Zur Vermeidung dieser Nachteile wird der Polychloropren-Feststoff mastiziert, um niedrigviskose Polychloropren-Typen als Festkautschuke zu erhalten. Die Mastizierung synthetischer Kautschuke verläuft bekanntlich nicht so leicht wie die des Naturkautschuks, insbesondere dann, wenn die Kautschuke Elektronen ziehende Substituenten, wie Zn, C1, aufweisen. Aus dem Stand der Technik sind Methoden zum thermooxidativen CR-Abbau bekannt. Dabei werden beispielsweise Dialkylxanthogendisulfide als Molekulargewichtsregler benutzt.

Derartig hergestellte niedrigviskose CR-Typen haben den Nachteil, dass sie sehr hohe Reglermengen aufweisen. Auch ist der thermooxidative Abbau mittels Scherbeanspruchung durch die Verwendung von Extrudern bekannt, wodurch ein Molekulargewichtsabbau eintritt. Zusammengefasst ist die Mastikation sehr zeitraubend und kann u. U. hohe Verarbeitungskosten verursachen.

Aus dem Stand der Technik sind zahlreiche Versuche bekannt, um die Produkteigenschaften von Polychloropren zu beeinflussen. Beispielsweise wird durch Zusatz von schwefelhaltigen organischen Kettenübertragungsmitteln wie z.B. Mercaptanen das Molekulargewicht des entstandenen Polymeren gesteuert. Auch die Herstellung hochviskoser Chloropren-Polymerisate durch portionsweise Zugabe des Kettenüberträgers während der Polymerisation ist bekannt. Die Anzahl und die Höhe der Reglerzugaben sind jedoch abhängig von der Polymerisationstemperatur, dem Umwandlungsgrad und der angestrebten Polymerviskosität. Die Zusätze an Regler müssen darüber hinaus bei bestimmten Monomerumsätzen erfolgen.

Aufgabe der Erfindung ist es nun, einen Polychloropren-Feststoff für Gummianwendungen bereitzustellen, welches einerseits eine gute Lagerung ermöglicht und ferner ein Fließverhalten aufweist, das für die Verarbeitbarkeit Vorteile bringt sowie ein Verfahren zur dessen Gewinnung und Isolierung.

Überraschenderweise gelang es Polychlorpren-Feststoffe für Gummianwendungen bereitzustellen, die sich im Fall der Verarbeitung unter Krafteinwirkung durch ein vorteilhaftes Viskositätsverhalten auszeichnen.

Gegenstand der Erfindung ist daher ein Polychloropren-Feststoff, welcher thixotrope Eigenschaften aufweist.

Unter Thixotropie versteht man im Allgemeinen eine Abnahme der Viskosität in Abhängigkeit von der Zeit bei konstanter Scherung. Hervorgerufen wird dieser Effekt in der Regel durch Überstrukturen, die sich im Verlauf der Scherung verändern. Im Falle der vorliegenden Erfindung wird beobachtet, dass die erfindungsgemäßen Polychloropren-Feststoffe bei gleichbleibender Temperatur unter mechanischer Krafteinwirkung/Scherung (z. B. verursacht durch Rühren, Schütteln oder Kneten) vorübergehend in einen Zustand niedrigerer Viskosität übergehen.. Überraschenderweise zeigt eine erfindungemäße Polychloropren-Feststoff-Lösung bei mechanischer Krafteinwirkung/Scherung zunächst einen Viskositätsabbau und im anschließenden Ruhezustand einen Viskositätsaufbau. Dieser Viskositätsabbau bzw. - wiederaufbau sind - ohne auf diese theoretische Begründung fixiert zu sein - möglicherweise auf molekularer Ebene auf einen Strukturabbau bzw. - wiederaufbau zurückzuführen. Diese Änderung der Viskosität hat den Vorteil, dass sich die CR-Feststoffe hervorragend mischen, kneten und mit anderen Additiven verarbeiten lassen.

Vorzugsweise wird das thixotrope Verhalten mittels der Brookfield-Viskositäts-Methode bestimmt. Zur Bestimmung des thixotropen Verhaltens wird der erfindungsgemäße Polychloropren-Feststoff in Lösung gebracht, vorzugsweise in organische Lösungsmittel, wie beispielsweise in Benzol, Toluol, Cyclohexan. Dann wird die Polychloropren-Feststoff-Lösung einer Vorbehandlung durch Scherung mittels eines Propellerrührers unterzogen und nach Ende des Schervorgangs die Viskosität gegen die Zeit gemessen.

Eine weitere Ausprägung der Thixotropie des erfindungsgemäßen Polychloropren-Feststoffes zeigt sich in der Abnahme der Schmelzviskosität durch eine Vorbehandlung auf einer Homogenisierungswalze. Vorzugsweise sinkt die Schmelzviskosität (Mooney 1+4 bei 100°C, ASTM D 1646), mit zunehmender Zahl der Durchläufe auf einer Homogenisierungswalze immer weiter ab. Es wurde jedoch festgestellt, dass die Schmelzviskosität nach etwa 20 Umläufen auf der Homogenisierungswalze nur noch langsam weiter sinkt

Als Homogenisierungswalze wird hier eine Walze verstanden, die nicht zur Mastikation eines Kautschuks geeignet ist. Die Homogenisierungswalze unterscheidet sich von einer Mastikationswalze in ihrem geringeren spezifischen Energieeintrag. Ein hoher Energieeintrag, wie dieser bei der Mastikationswalze der Fall ist, bewirkt eine Zerstörung der Polymerkette und damit eine Erniedrigung der Schmelzviskosität.

Des Weiteren betrifft die Erfindung ein Verfahren zur Isolierung und Gewinnung von Polychloropren-Feststoffen, wobei eine wässrige Polychloropren-Dispersion mit Koagulationsmittel enthaltendem Wasserdampf in Kontakt gebracht wird, wodurch der erfindungsgemäße Polychloropren-Feststoff koaguliert.

Überraschenderweise wurde festgestellt, dass die Produkteigenschaft des Polychloropren-Feststoffes durch das erfindungsgemäße Verfahren beeinflusst und geändert wurde, obwohl die Polychloropren-Dispersion nach herkömmlichem Verfahren hergestellt wurde.

Beim erfindungsgemäßen Verfahren koaguliert der CR Feststoff vorzugsweise in Strangform oder als Krümel.

Der ausgefällte Polychloropren-Feststoff wird anschließend aus der Koagulationssuspension abgetrennt und dann vorzugsweise in einer Entwässerungsvorrichtung entwässert. Beispielsweise kann hier eine Seiher-Schnecke oder Entwässerungswalzen eingesetzt werden. Andere bekannte Entwässerungsvorrichtungen sind ebenfalls einsetzbar.

Anschließend wird der entwässerte Polychloropren-Feststoff mittels einer Trocknungsvorrichtung getrocknet. Es handelt sich bei der Trocknungsvorrichtung beispielsweise um einen Doppelwellenextruder, eine Trocknungsschnecke oder einen Trocknungskneter. Vorzugsweise können in der Trocknungsvorrichtung Additive und/oder Inerte zugesetzt werden. Hierdurch können die übrigen Produkteigenschaften des erfindungsgemäßen Polychloropren-Feststoffes für jede Anforderung optimal beeinflusst werden. Additive zur Beeinflussung der Produkteigenschaften sind vorzugsweise zum Beispiel Stabilisatoren, Beschleuniger, Emulgatoren, Laugen, Alterungsschutzmittel und viskositätsbeeinflussende Verarbeitungshilfsmittel. Es können alle herkömmlichen Additive eingesetzt werden. Inerte sind zum Beispiel Stickstoff, Argon, Kohlenstoffdioxid, welche zur Beeinflussung der Polymerschmelztemperaturen zugesetzt werden.

Der erfindungsgemäße Polychloropren-Feststoff wird bevorzugt mittels der Unterwassergranulierung granuliert und gekühlt.

Der erfindungsgemäße Polychloropren-Feststoff wird üblicherweise aus einer Polychloropren-Dispersion gewonnen, die mittels Emulsionspolymerisation bei einer Polymerisationstemperatur von größer als 30°C, bevorzugt im Bereich von 35°C bis 50°C und besonders bevorzugt im Bereich von 35°C bis 45°C hergestellt wurde. Der Polymerisationssumsatz liegt üblicherweise im Bereich von 50% bis 80% liegt. Nach der Polymerisation wird überschüssiges Monomer mittels Vakuum-Entgasung auf einen Wert im Bereich von 1000ppm bis 1ppm entfernt. Emulsionspolymerisationsverfahren sind aus dem Stand der Technik bekannt und können hier eingesetzt werden.

Für die Polymerisation können neben Chloropren (2-Chlor-1,3-Butadien) optional auch noch ein oder mehrere verschiedene Co-Monomere, wie etwa 2,3-Dichlorbutadien, zur Steuerung der Kristallisation zugesetzt werden.

Die Polychloropren-Dispersion, aus der der erfindungsgemäße CR-Feststoff gewonnen wird, weist vorzugsweise einen Feststoffanteil im Bereich von 20 bis 45 Gew.-% und einen Gelanteil im Bereich von 0 bis 10 Gew.-% auf. Der Gelanteil kann jedoch auch gezielt erhöht werden.

Vorzugsweise wird der Koagulationsmittel enthaltende Wasserdampf aus Wasserdampf und einer wässrigen Koagulationsmittellösung gebildet. Als Koagulationsmittellösung wird bevorzugt eine wässrige Lösung eines Koagulationsmittels aus anorganischen Salzen, bevorzugt von Metallen der zweiten und dritten Hauptgruppe des Periodensystems, eingesetzt.

Als Koagulationsmittel wird bevorzugt Calciumchlorid, Magnesiumchlorid, Magnesiumsulfat, Aluminiumchlorid und/oder Aluminiumsulfat eingesetzt.

Vorzugsweise weist die Koagulationsmittellösung eine Koagulationsmittel-Konzentration zwischen 1 Gew.-% und 60 Gew.-%, bevorzugt zwischen 2 Gew.-% und 55 Gew.-%, besonders bevorzugt zwischen 10 Gew.-% und 35 Gew.-%, bezogen auf die Koagulationsmittellösung, auf.

Bevorzugt wird die Polychloropren-Dispersion vor dem Kontakt mit dem Koagulationsmittel enthaltenden Wasserdampf verdünnt.

Dabei wird die Polychloropren-Dispersion vorzugsweise auf einen Feststoffgehalt von 38 Gew.-% bis 45 Gew.-%, bevorzugt von 28 Gew.-% bis 35 Gew.-% und besonders bevorzugt von 20 Gew.-% bis 28 Gew.-%, bezogen auf die Polychloropren-Dispersion, verdünnt.

Für die Verdünnung wird bevorzugt Wasser, besonders bevorzugt demineralisiertes Wasser eingesetzt.

Die Verdünnung ist insofern wichtig, da nicht nur das Verkleben und Verstopfen der Strömungs-/Koagulationsvorrichtung verhindert bzw. reduziert werden soll, sondern auch eine optimale Koagulation, bedingt durch den Kontakt zwischen der CR-Dispersion und dem Koagulationsmittel enthaltenden Wasserdampf, gewährleistet werden kann.

Besonders bevorzugt werden 80 bis 1000 kg Wasserdampf pro Tonne Feststoff der Polychloropren-Dispersion, bevorzugt 80 bis 300 kg Wasserdampf pro Tonne Feststoff der Polychloropren-Dispersion, eingesetzt.

Des Weiteren werden 10 bis 40 kg Koagulationsmittel pro Tonne Feststoff der Polychloropren-Dispersion, bevorzugt 10 bis 25 kg Koagulationsmittel pro Tonne Feststoff der Polychloropren-Dispersion, eingesetzt.

Für die Koagulation durchläuft die wässrige Polychloropren-Dispersion eine Strömungs-/Koagulationsvorrichtung, wobei die Strömungs-/ Koagulationsvorrichtung Aussparungen aufweist, durch die der Koagulationsmittel enthaltende Wasserdampf durchtreten kann und in der Strömungs-/Koagulationsvorrichtung auf die Polychloropren-Dispersion trifft. Dabei koaguliert der erfindungsgemäße Polychloropren-Feststoff.

Bevorzugt wird der Polychloropren-Feststoff in der Entwässerungsvorrichtung bis zu einer Restfeuchte von 10 Gew.-% bis 15 Gew.-%, bevorzugt 1,0 Gew.-% bis 9 Gew.-%, bezogen auf den Polychloropren-Feststoff, entwässert.

In der Trocknungsvorrichtung wird der entwässerte Polychloropren-Feststoff vorzugsweise bis zu einer Restfeuchte von 1 Gew.-% bis 1,5 Gew.-%, besonders bevorzugt 0,5 Gew.-% bis 1 Gew.-% und ganzbesonders bevorzugt 0,1 Gew.-% bis 0,5 Gew.-%, bezogen auf den entwässerten Polychloropren-Feststoff, getrocknet.

Am Ende der Trocknungsphase in der Trocknungsvorrichtung liegt der Polychloropren-Feststoff als Kautschukschmelze vor. Die Schmelze tritt durch eine Kopfplatte aus und wird mit einer Schneidvorrichtung konfektioniert und in der Unterwassergranulierung durch Wasser gekühlt und transportiert.

Der erfindungsgemäße Polychloropren-Feststoff besitzt üblicherweise eine Mooney Viskosität (ML 1+4 at 100°C) von 5 bis 150 Mooney Einheiten. Für die Gummianwendungen geeignet sind dabei bevorzugt erfindungsgemäße Polychloropren-Feststoffe mit einer Mooney Viskosität (ML 1+4 at 100°C) im Bereich von 10 bis 70, besonders bevorzugt 15 bis 65 oder alternativ im Bereich von 80 bis 120 Mooney Einheiten. Vorzugsweise wird dem Wasser in der Unterwassergranulierung ein Trennmittel zugesetzt. Als Trennmittel kommen hier beispielsweise Talkum, Metallstearate in Frage. Andere herkömmliche Trennmittel sind ebenfalls vorstellbar.

Die erfindungsgemäßen Polychloropren-Feststoffe lassen sich ausgezeichnet für Gummianwendungen einsetzen.

Gegenstand der Erfindung sind somit vulkanisierbare Mischungen enthaltend mindestens einen erfindungsgemäßen Polychloropren-Feststoff sowie mindestens ein Vernetzersystem.

Es ist ferner möglich, dass diese vulkanisierbaren Mischungen zusätzlich ein oder mehrere Kautschukadditive enthalten. Diese sind dem Fachmann wohlbekannt.

Gegenstand der Erfindung ist ferner ein Verfahren zur Herstellung von Vulkanisaten auf Basis der erfindungsgemäßen Polychloropren-Feststoffe, indem man die vorgenannten vulkanisierbare Mischung vernetzt. Üblicherweise erfolgt dies bei erhöhter Temperatur.

Gegenstand der Erfindung sind somit ferner die Vulkanisate. Es handelt sich hierbei typischerweise um Gummiartikel wie technischen Gummiwaren, Gewebegummierungen, Kabel, Schläuche, Förderbänder, Form- und Spritzartikel und Moosgummiprofile.

Nachstehend wird die Erfindung anhand von Beispielen und Zeichnung näher erläutert:

### Beispiele:

### Herstellung einer Polychloropren-Dispersion

Die Herstellung einer Polychloropren-Dispersion erfolgt unter Einsatz der unten genannten Grundrezeptur (Angaben in Gew.-Teilen pro 100 Gew.-Teile eingesetztes Chloropren):

| | |
|---|---|
| 125 Gew.-Teile | Wasser |
| 100 Gew.-Teile | Monomere (2-Chlor-1,3-Butadien oder eine Mischung aus 2-Chlor-1,3-Butadien und 2,3-Dichlorbutadien) |
| 3 Gew.-Teile | Natrium Salz der disproportionierten Abietinsäure |
| 0,5 Gew.-Teile | Kaliumhydoxid |
| 0,2 Gew.-Teile | n-Dodecylmerkaptan |
| 0,5 Gew.-Teile | Natrium Salz der mit Formaldehyd kondensierten Naphthalinsulfonsäure |

Die Polychloropren-Dispersion wird durch radikalische Emulsionspolymerisation zwischen 40°C und 45°C aus den vorgenannten Komponenten nach üblichen Methoden (z. B. Ullmanns Enciclopedia of Industrial Chemistry, Vol 23A, S. 252-262.) hergestellt. Die Polymerisation wird bei einem Umsatz zwischen 50% und 70% abgestoppt und die Dispersion durch Vakuum-Entgasung von Restmonomeren befreit.

### Verfahren zur Isolierung und Gewinnung eines erfindungsgemäßen Polychloropren-Feststoffes

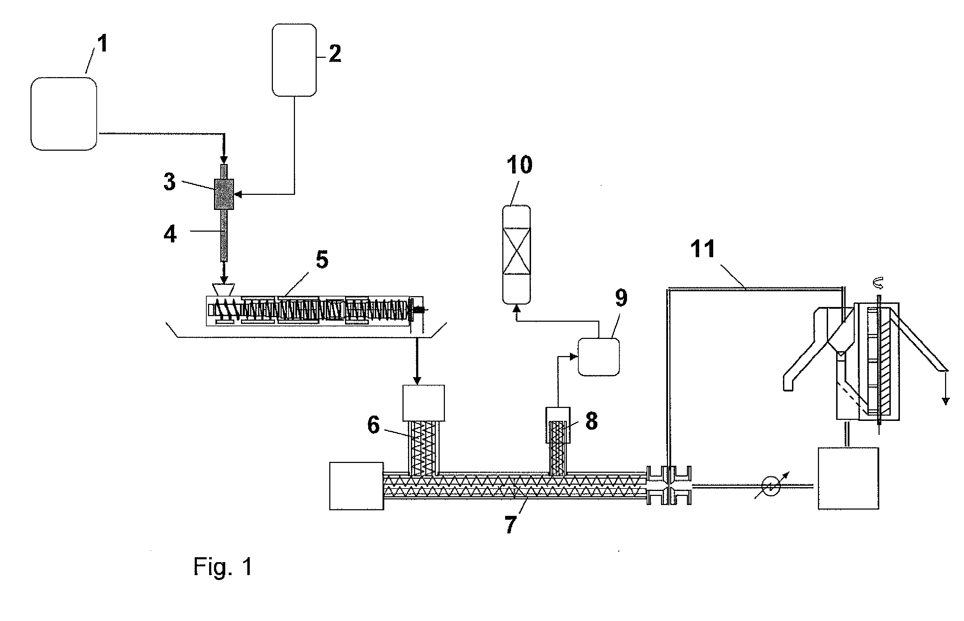

Fig. 1 zeigt einen schematischen Aufbau eines erfindungsgemäßen Verfahrens.

Die o. g. Polychloropren-Dispersion wird aus einem Lagerbehälter 1 in eine Strömungs-/Koagulationsvorrichtung 3 gefördert. Vor Einlauf in die Strömungs-/Koagulationsvorrichtung 3 kann die Polychloropren-Dispersion mit Wasser verdünnt werden.

Aus einem weiteren Lagerbehälter 2 wird das wässrige Koagulationsmittel, welches vorab mit Wasserdampf gemischt wurde, der Strömungs-/Koagulationsvorrichtung 3 zugeführt und über deren Aussparungen mit der Polychloropren-Dispersion in Kontakt gebracht. Hierbei wird die Polychloropren-Dispersion in der Strömungs-/Koagulationsvorrichtung 3 und im nachfolgendem Fällrohr 4 quantitativ gefällt.

Das Fällrohr 4 mündet in den Einzugsbereich der Entwässerungsvorrichtung 5, dort wird der ausgefällte Polychloropren-Feststoff entwässert.

Der entwässerte Polychloropren-Feststoff wird entweder als Strang oder als Krümel der Trocknungsvorrichtung 7 zugeführt und getrocknet. Um die Produkteigenschaften des erfindungsgemäßen Polychloropren-Feststoffes zu beeinflussen, können in der Zuführschnecke 6 oder im nachfolgenden Bereich der Trocknungsvorrichtung 7 Additive oder Inerte zudosiert werden.

Über unter Vakuum stehende Döme 8 werden die Brüden abgezogen und die Rückhaltung von Kautschukpartikeln mit Stopfschnecken in den Dömen 8 gewährleistet. Hinter den Dömen 8 befinden sich Abscheider 9, in denen mitgerissene Kautschukpartikel abgeschieden und nachfolgend einem Abluftwäscher 10 zugeführt werden.

Die heiße Kautschukschmelze aus der Trocknungsvorrichtung 7 wird in der Unterwassergranulierung über eine Kopfplatte und Schneidmesser in Chips geschnitten. Das Abkühlen und der Transport der Chips erfolgt über einen Wasserstrom 11, der wahlweise mit Additiven (z.B. Trennmittel) versetzt sein kann

Die Chips werden zunächst über eine Siebrutsche vom Wasser getrennt. Die Restenergie der Chips verdampft das an der Oberfläche anhaftende Wasser. Ergänzend kann ein warmer Luftstrom das Entfernen des anhaftenden Wassers unterstützen.

Der so gewonnene erfindungsgemäße Polychloropren-Feststoff wird für die weiteren Eigenschaftsbestimmungen eingesetzt.

### Messung des thixotropen Verhaltens mittels der Brookfieldviskositäts-Methode

Für die Bestimmung des thixotropen Verhaltens werden der erfindungsgemäße Polychloropren-Feststoff und ein Vergleichsbeispiel in Toluol gelöst.

Als Vergleichsbeispiel wird ein Polychloropren-Feststoff, welcher aus der oben genannten Polychloropren-Dispersion mittels einer herkömmlichen Gefrierkoagulation mit anschließender Trocknung im Düsenbandtrockner gewonnen wurde, eingesetzt.

### 1. Lösevorgang:

Es werden jeweils 8,6 g Polychloropren-Feststoff mit 91,4 g Toluol in einem Erlenmeyerkolben eingewogen und mittels Magnetrührfisches bis zur vollständigen Löslichkeit des Polychloropren-Feststoffes bei Raumtemperatur gerührt.

### 2. Vorbehandlung durch Scherung

Zur Einbringung von Scherung werden beide toluolische Polychloropren-Lösungen durch schnelles Rühren mit einem Propellerrührer mit 500 Umin⁻¹ für ca. 1 Minute vorbehandelt.

Die Viskositätsmessung erfolgt mittels eines RotationsViskosimeters der Marke Brookfield DV-II+ bei 60 Umin⁻¹, Spindel 2 bei 25 °C.

**Tab. 1: Messung der Viskosität nach Ende der Scherung**

| Messdauer /min | Viskosität /mPas |
|---|---|
| 00:00 | 170 |
| 00:01 | 178 |
| 00:02 | 182 |
| 00:07 | 186 |
| 00:22 | 188 |

Der in Tabelle 1 aufgezeigte Viskositätsverlauf ergibt sich nach der oben beschriebenen Vorbehandlung (2) mit anschließender Viskositätsmessung.

**Tab. 2: Messung der Viskositäts nach Lagerung ohne vorhergehende Scherung**

| Messdauer /min | Viskosität /mPas |
|---|---|
| 00:00 | 230 |
| 00:01 | 202 |
| 00:02 | 198 |
| 00:05 | 193 |
| 00:10 | 191 |

Der in Tabelle 2 aufgezeigte Viskositätsverlauf ergibt sich nach Lagerung der über den Löseschritt (1) hergestellten Polymerlösung für 30 Minuten bei 25 °C ohne die Vorbehandlung durch Scherung.

Die mit dem erfindungsgemäßen Polychloropren-Feststoff hergestellte Polymerlösung verhält sich thixotrop. Ihre Viskosität ist scherzeitabhängig und verläuft bei konstanter Scherung asymptotisch gegen ein Gleichgewicht. Aus dem Ruhezustand sinkt demnach die Viskosität bei einer Messung bis zu einem Gleichgewicht ab. Wird in diese Lösung mittels des o. g. Propellerrührers zusätzliche Scherenergie eingebracht und sofort die Viskosität gemessen, so wird ein gegenläufige Verhalten beobachtet, die Viskosität steigt gegen dieselbe Gleichgewichtsviskosität an.

Eine mit dem nicht-erfindungsgemäßen Polychloropren-Feststoff hergestellte Polymerlösung zeigt dieses Verhalten nicht. Die Polymerlösung verhält sich strukturviskos, jedoch nicht thixotrop. Die Messung nach Lagerung und Vorbehandlung ergibt bei gleicher Messdauer immer einen konstanten Wert von 104 mPas.

### Schmelzviskositätsverlauf nach Vorbehandlung auf einer Homogenisierungswalze

Für die Bestimmung wurden der o. g. erfindungsgemäße Polychloropren Feststoff und der o. g. nicht erfindungsgemäße Polychloropren-Feststoff verglichen. Die Einbringung von Scherung erfolgt bei 25 °C in einer Laborwalze, wobei diese eine Walzenbreite von 30 cm und eine Walzenspalte von 1 mm und eine Rotation von 10 Umin⁻¹/10 Umin⁻¹ (vordere/hintere Walze) aufweist.

Es wurden jeweils ca. 200 g Polychloropren-Feststoff eingesetzt. Es wurde eine Mooney Viskosität nach ASTM D 1646 (Mooney 1+4 bei 100 °C) gemessen.

**Tabelle 3: Schmelzviskositätsverlauf**

| **Vorbehandlung** | **Erfindungsgemäßer Polychloropren-Feststoff** | **Nicht-erfindungsgemäßer Polychloropren-Feststoff** |
|---|---|---|
| | **ML1+4/ME** | **ML1+4 /ME** |
| 0-Wert (vor der Behandlung auf der Homogenisierungswalze) | 56 | 51 |
| 10 Umläufe in Walze | 48 | 50 |
| 20 Umläufe in Walze | 46 | 51 |

Es wurde überraschend gefunden, dass die Schmelzviskosität (Mooney 1+4 bei 100 °C) des erfindungsgemäßen Polychloropren-Feststoffs durch eine Behandlung auf der Homogenisierungswalze sinkt. Während der nicht erfindungsgemäße Polychloropren-Feststoff nach einer Vorbehandlung mittels Homogenisierungswalze eine konstante Viskosität aufweist, fällt die Schmelzviskosität bei dem erfindungsgemäßen Polychloropren-Feststoff ab. Der Wert der Schmelzviskosität nähert sich mit zunehmender Zahl der Durchläufe asymptotisch einem Gleichgewichtswert.

### Alterungseigenschaften von Vulkanisaten

Es wurde festgestellt, dass sich die Alterungseigenschaften der Vulkanisate, die mit dem erfindungsgemäßen Polychloropren-Feststoff hergestellt wurden, verändern bzw. dass sich die Verhärtung der Vulkanisate bei Lagerung unter normaler Atmosphäre für 7 Tage bei 100 °C verringert.

Für die Messung der Eigenschaften wurde die nachfolgende Mischungsrezeptur verwendet:

**Tabelle 4: Mischungsrezeptur zur Herstellung der Vulkanisate**

| Mischungsbestandteile | Teile /phr |
|---|---|
| Polymer | 100 |
| Ruß N772 | 30 |
| Stearinsäure | 0,5 |
| MgO | 4 |
| ETU | 0,4 |
| ZnO | 5 |

Als Polymer werden der erfindungsgemäße Polychloropren-Feststoff und das Vergleichsbeispiel, wie oben beschrieben, eingesetzt.

Als Ruß wurde ein Cabot Ruß Regal SRF N772 verwendet.

Als Schwefelspender wurde Ethylenthioharnstoff der Firma Rheinchemie "Rhenogran ETU-80" eingesetzt.
"phr" bedeutet parts per hundred of rubber.

Die Mischung wurde in einem *"Standard Internal Mixer"* nach ASTM D3182 erstellt. Die Vulkanisation wurde bei 160 °C für einen Zeitraum von 30 Minuten durchgeführt. Die Probenkörper wurden nach ASTM D 3182 hergestellt.

Zug-DehnungsVersuche wurden vor und nach Hitze-Alterung bei 100 °C für 7 Tage (DIN 53508) an einem S2 Zugstab (nach DIN 53504) bei Raumtemperatur durchgeführt.

Die Härte wurde nach DIN 53505 als Shore A Härte bei Raumtemperatur gemessen.

**Tabelle 5: Anfangswerte Zug-Dehnung und Härte**

| | | Vergleichsbeispiel | Erfindungsgemäßes Beispiel |
|---|---|---|---|
| Spannungswert-S10 | MPa | 0,5 | 0,5 |
| Spannungswert -S25 | MPa | 0,9 | 1 |
| Spannungswert -S 50 | MPa | 1,4 | 1,6 |
| Spannungswert -S 100 | MPa | 2,4 | 2,7 |
| Spannungswert -S 300 | MPa | 15,0 | 16,8 |
| Bruchdehnung | % | 370 | 377 |
| Zugfestigkeit | MPa | 20 | 23 |
| Härte | Sh A | 59 | 61 |

Wie aus Tabelle 5 ersichtlich, zeigen die Vulkanisate, hergestellt aus dem konventionell hergestellten Polychloropren-Feststoff (Vergleichsbeispiel) und aus dem erfindungsgemäßen Polychloropren-Feststoff, annähernd gleiche Vulkanisateigenschaften bei der Zug-Dehnung. Auch zeigen sie ähnliche Shore Härte.

**Tabelle 6: Vulkanisationseigenschaften nach Alterung 7 Tage bei 100 °C unter Normalatmosphäre**

| | | Vergleichsbeispiel | Erfindungsgemäßes Beispiel |
|---|---|---|---|
| S10 -Änderung | % | 80 | 60 |
| S25 -Änderung | % | 100 | 50 |
| S 50 -Änderung | % | 121 | 67 |
| S 100 -Änderung | % | 154 | 77 |
| S 300 -Änderung | % | | |
| Bruchdehnung Änderung | % | -48 | -37 |
| Zugfestigkeit Änderung | % | -27 | -29 |
| Härteänderung ShA | ShA | 12 | 9 |

Tabelle 6 beschreibt die Zug-Dehnungs-Eigensrhaften eines bei 100 °C für 7 Tage unter normaler Atmosphäre gelagerten S2-Zugstab des Vergleichsbeispiels. Durch diverse Alterungsprozesse kommt es zu einer Verhärtung des Vulkanisatsprüfkörpers des Vergleichsbeispiels, verdeutlicht durch den Anstieg der Spannungswerte bei einer vorgegebenen Dehnung und durch den Anstieg der Shore Härte. Eine geringere Verhärtung am Vulkanisatsprüfkörper, hergestellt mit dem erfindungsgemäßen Polychloropren-Feststoff, ist deutlich zu erkennen. Dies führt entweder zu einer höheren Dauerbetriebstemperatur des Vulkanisats oder bei gleicher Temperatur zu einer erhöhten Betriebsdauer und damit zu einer deutlichen Verbesserung des Vulkanisats.

## Patentansprüche

1. Polychloropren-Feststoff, **dadurch gekennzeichnet, dass** er thixotrope Eigenschaften aufweist.

2. Polychloropren-Feststoff nach Anspruch 1, **dadurch gekennzeichnet, dass** die Eigenschaft der Thixotropie sich darin manifestiert, dass die Lösungsviskosität einer Lösung des Polychloropren-Feststoffs bei mechanischer Krafteinwirkung/Scherung abnimmt und sich in einem anschließenden Ruhezustand wieder aufbaut.

3. Polychloropren-Feststoff nach Anspruch 1, **dadurch gekennzeichnet, dass** sich unter mechanischer Krafteinwirkung/Scherung im Polychloropren-Feststoff ein Strukturabbau vollzieht und im sich anschließenden Ruhezustand ein Strukturwiederaufbau erfolgt.

4. Polychloropren-Feststoff nach Anspruch 2, **dadurch gekennzeichnet, dass** der Abbau bzw. Aufbau der Lösungsviskosität einer Lösung des Polychloropren-Feststoffs als Funktion der Zeit eintritt..

5. Polychloropren-Feststoff nach Anspruch 2, **dadurch gekennzeichnet, dass** die Lösungsviskosität mittels der Brookfeldviskosität-Methode bestimmt wird.

6. Polychloropren-Feststoff nach Anspruch 1 erhältlich aus einer Polychloropren-Dispersion, die mittels Emulsionspolymerisation bei einer Polymerisationstemperatur größer als 30°C, bevorzugt im Bereich von 35°C bis 50°C und besonders bevorzugt im Bereich von 35 °C bis 45°C hergestellt wurde.

7. Polychloropren-Feststoff nach Anspruch 1, wobei sich die Eigenschaft der Thixotropie darin manifestiert, dass die Schmelzviskosität gemessen als Mooney Viskosität (ML 1+4 bei 100°C) gemäß ASTM D 1646) bei Behandlung des Polychloropren-Feststoffs über eine Walze abnimmt.

8. Verfahren zur Isolierung und Gewinnung von Polychloropren-Feststoffen nach einem der vorgenannten Ansprüche 1 bis 7, **dadurch gekennzeichnet, dass** eine wässrige Polychloropren-Dispersion mit Koagulationsmittel enthaltenden Wasserdampf in Kontakt gebracht wird, wobei der Polychloropren-Feststoff koaguliert.

9. Verfahren nach Anspruch 8, **dadurch gekennzeichnet, dass** der Polychloropren-Feststoff aus der Koagulationssuspension abgetrennt wird.

10. Verfahren nach Anspruch 9, **dadurch gekennzeichnet, dass** der Polychloropren-Feststoff mittels einer Entwässerungsvorrichtung entwässert wird.

11. Verfahren nach Anspruch 10, **dadurch gekennzeichnet, dass** der entwässerte Polychloropren-Feststoff mittels einer Trocknungsvorrichtung getrocknet wird.

12. Verfahren nach Anspruch 11, **dadurch gekennzeichnet, dass** dem entwässerten Polychloropren-Feststoff in der Trocknungsvorrichtung Additive und/oder Inerte zugesetzt werden.

13. Verfahren nach Anspruch 12, **dadurch gekennzeichnet, dass** der getrocknete, entwässerte, Polychloropren-Feststoff mittels der Unterwassergranulierung granuliert und gekühlt wird.

14. Verfahren nach Anspruch 13, **dadurch gekennzeichnet, dass** die Polychloropren-Dispersion mittels der Emulsionspolymerisation hergestellt wird, wobei die Polymerisationstemperatur größer als 30°C ist und bevorzugt im Bereich von 35 bis 50°C und besonders bevorzugt im Bereich von 35 bis 45°C liegt.

15. Verfahren nach Anspruch 14, **dadurch gekennzeichnet, dass** der Koagulationsmittel enthaltende Wasserdampf mittels Wasserdampf und einer wässrigen Koagulationsmittelösung gebildet wird.

16. Verfahren nach Anspruch 15, **dadurch gekennzeichnet, dass** als Koagulationsmittellösung eine wässrige Lösung aus anorganischen Salzen (Koagulationsmittel), bevorzugt von Metallen der zweiten und dritten Hauptgruppe des Periodensystems, besonders bevorzugt Calciumchlorid, Magnesiumchlorid, Magnesiumsulfat, Aluminiumchlorid und/oder Aluminiumsulfat eingesetzt wird.

17. Verfahren nach Anspruch 16, **dadurch gekennzeichnet, dass** die Koagulationsmittellösung eine Koagulationsmittel-Konzentration zwischen 1 Gew.-% und 60 Gew.-%, bevorzugt zwischen 2 Gew.-% und 45 Gew.-%, besonders bevorzugt zwischen 10 Gew.-% und 35 Gew.-%, bezogen auf die Koagulationsmittellösung aufweist.

18. Verfahren nach Anspruch 17, **dadurch gekennzeichnet, dass** die Polychloropren-Dispersion vor dem Kontakt mit dem Koagulationsmitteldampf verdünnt wird,bevorzugt auf einen Feststoffgehalt von 38 Gew.-% bis 45 Gew.-%, besonders bevorzugt von 28 Gew.-% - 35 Gew.-% und insbesonders bevorzugt von 20 Gew.-% - 28 Gew.-%, bezogen auf die Polychloropren-Dispersion.

19. Verfahren nach Anspruch 8, **dadurch gekennzeichnet, dass** 80 kg bis 1000 kg Wasserdampf / t Feststoff der Polychloropren-Dispersion, bevorzugt 80 kg -250 kg Wasserdampf / t Feststoff der Polychloropren-Dispersion eingesetzt wird.

20. Verfahren nach Anspruch 8, **dadurch gekennzeichnet, dass** 10 bis 40 kg Koagulationsmittel / t Feststoff der Polychloropren-Dispersion, bevorzugt 10 kg - 25 kg Koagulationsmittel / t Feststoff der Polychloropren-Dispersion eingesetzt wird.

21. Vulkanisierbare Mischung enthaltend mindestens einen Polychloropren-Feststoff gemäß einem der Ansprüche 1 bis 7 und mindestens einen Vernetzer.

22. Verfahren zur Herstellung von Vulkanisaten auf Basis mindestens eines Polychloropren-Feststoffs gemäß einem der Ansprüche 1 bis 7, **dadurch gekennzeichnet, dass** die vulkanisierbare Mischung nach Anspruch 21 einer Vernetzungsreaktion unterzogen wird.

23. Vulkanisate auf Basis eines mindestens eines Polychloropren-Feststoffs gemäß einem der Ansprüche 1 bis 7.
